# FASCICULE DE BREVET EUROPEEN

(11) **EP 3 152 860 B1**
(45) Date de publication et mention de la délivrance du brevet: **05.05.2021**
(21) Numéro de dépôt: 15729547.8
(22) Date de dépôt: 29.05.2015
(51) Int. Cl.: H04L 9/08, G07F 7/08, H04L 9/32

(54) **PROCÉDÉ D'AUTHENTIFICATION D'UNE PREMIÈRE ENTITÉ ÉLECTRONIQUE PAR UNE SECONDE ENTITÉ ÉLECTRONIQUE ET ENTITÉ ÉLECTRONIQUE METTANT EN OEUVRE UN TEL PROCÉDÉ**
VERFAHREN ZUR AUTHENTIFIZIERUNG EINER ERSTEN ELEKTRONISCHEN EINHEIT DURCH EINE ZWEITE ELEKTRONISCHE EINHEIT UND DIESES VERFAHREN UMSETZENDE ELEKTRONISCHE EINHEIT
METHOD FOR THE AUTHENTICATION OF A FIRST ELECTRONIC ENTITY BY A SECOND ELECTRONIC ENTITY, AND ELECTRONIC ENTITY IMPLEMENTING SUCH A METHOD

(30) Priorité: 06.06.2014 FR 1455185
(43) Date de publication de la demande: 12.04.2017
(73) Titulaire: IDEMIA France, 92400 Courbevoie (FR)
(72) Inventeur: DOTTAX, Emmanuelle, 92700 Colombes (FR); GALDO, Florian, 92700 Colombes (FR); VALLIERES, Jean-Philippe, 92700 Colombes (FR)
(74) Mandataire: Jacobacci Coralis Harle
(86) Numéro de dépôt international: PCT/FR2015/051424
(87) Numéro de publication internationale: WO 2015/185833

(56) Documents cités:
- "Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 octobre 1996 (1996-10-01), XP001525012, ISBN: 978-0-8493-8523-0 Extrait de l'Internet: URL:http://www.cacr.math.uwaterloo.ca/hac
- "Chapter 10: Identification and Entity Authentication ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , 1 octobre 1996 (1996-10-01), XP001525010, ISBN: 978-0-8493-8523-0 Extrait de l'Internet: URL:http://www.cacr.math.uwaterloo.ca/hac/
- "GlobalPlatform Card Technology - Secure Channel Protocol 03 - Card Specification v 2.2 Amendment D, version 1.0", INTERNET CITATION, avril 2009 (2009-04), pages 1-16, XP009182501, Extrait de l'Internet: URL:http://www.globalplatform.org/specific ationscard.asp [extrait le 2015-02-10] cité dans la demande
- "Global Platform Card Specification Version 2.2", , 31 mars 2006 (2006-03-31), XP055090891, Extrait de l'Internet: URL:http://www.win.tue.nl/pinpasjc/docs/GP CardSpec_v2.2.pdf [extrait le 2013-11-29]
- PERRIG A ET AL: "SPINS: SECURITY PROTOCOLS FOR SENSOR NETWORKS", WIRELESS NETWORKS, ACM, 2 PENN PLAZA, SUITE 701 - NEW YORK USA, vol. 8, no. 5, 1 September 2002 (2002-09-01), pages 521-534, XP001131432, ISSN: 1022-0038, DOI: 10.1023/A:1016598314198

## Description

### DOMAINE TECHNIQUE AUQUEL SE RAPPORTE L'INVENTION

La présente invention concerne l'établissement d'un canal sécurisé entre deux entités électroniques.

Elle concerne plus particulièrement un procédé d'authentification d'une première entité électronique par une seconde entité électronique, ainsi qu'une entité électronique mettant en œuvre un tel procédé.

L'invention s'applique particulièrement avantageusement dans le cas où une clé cryptographique utilisée par la première entité électronique pour générer un défi destiné à la seconde entité électronique est également utilisée pour générer une clé de session destinée à chiffrer des échanges de données entre la première entité électronique et la seconde entité électronique.

### ARRIERE-PLAN TECHNOLOGIQUE

Lorsqu'une première entité électronique souhaite s'authentifier auprès d'une seconde entité électrique en prouvant sa connaissance d'un secret (en général une clé cryptographique) sans transmettre ce secret, on peut procéder à un échange de type défi-réponse (ou *"challenge-response"* selon l'appellation anglo-saxonne) entre les deux entités électroniques : la seconde entité électronique envoie un défi à la première entité électronique, qui doit pour s'authentifier renvoyer en retour une réponse attendue associée au défi, typiquement le résultat d'un calcul combinant le secret et le défi reçu.

Afin de réaliser une authentification mutuelle, la première entité électronique envoie elle aussi un défi à la seconde entité électronique, qui doit déterminer la réponse attendue à cet autre défi et l'émettre à destination de la première entité électronique.

Les défis utilisés sont en général des nombres aléatoires générés par l'entité électronique émettrice du défi afin d'éviter qu'un tiers malintentionné puisse s'authentifier par simple répétition (parfois dénommée *"rejeu"*) d'une réponse émise antérieurement par la première entité électronique.

Ces valeurs aléatoires peuvent en outre être utilisées, en combinaison avec une clé cryptographique connue seulement des deux entités électroniques, pour générer des clés de session visant à sécuriser l'échange de données entre les deux entités électroniques. Les clés de session ainsi générées sont ainsi différentes pour chaque session d'échanges entre les deux entités électroniques.

L'utilisation de valeurs aléatoires générées respectivement dans chacune des deux entités électroniques rend toutefois nécessaire l'échange bidirectionnel de données pour mener à terme le processus d'authentification mutuelle et de génération des clés de session (puisque chaque entité doit recevoir la valeur aléatoire générée par l'autre entité).

Pour éviter cela et permettre ainsi la mise en œuvre de tels processus sans avoir à attendre un retour immédiat de la première entité électronique (dite *"esclave"* dans la suite), il a été prévu d'utiliser, en lieu et place de la valeur aléatoire générée par la première entité électronique, une valeur dite *"pseudo-aléatoire",* basée par exemple sur la valeur d'un compteur de la première entité électronique.

La seconde entité électronique (dite *"maître"* ou *"hôte"* dans la suite), qui a également connaissance de la valeur du compteur, peut ainsi préparer à l'avance les données à envoyer (typiquement sous forme de commandes à destination de l'entité électronique esclave), en chiffrant ces données au moyen de la clé de session obtenue en fonction notamment de la valeur du compteur, et les transmettre par lots.

Cette technique est utilisée pour la personnalisation d'entités électroniques sécurisées (telles que des cartes à microcircuit ou des circuits intégrés sécurisés) mais peut également être utilisée dans d'autres contextes.

Des processus tels que présentés ci-dessus sont par exemple décrits dans la spécification technique *"*GlobalPlatform Card Technology - Secure Channel Protocol 03 - Card Specification v 2.2 Amendment D", version 1.1, septembre 2009.

Cette spécification prévoit notamment que la réponse de l'entité électronique esclave au défi de l'entité électronique hôte soit accompagnée du défi généré par l'entité électronique esclave et destiné à l'entité électronique hôte, comme cela est usuel lorsqu'une authentification mutuelle est recherchée.

A. Perrig et al: "SPINS: Security Protocols for Sensor Networks", expose un procédé de vérification de l'actualité de la réponse à un défi entre deux dispositifs, dans le cadre de la communication sécurisée entre noeuds dans un réseau de senseurs.

A. Menezes, P. van Oorschot, et S. Vanstone: "Handbook of Applied Cryptography" expose expose la connaissance générale de l'homme du métier dans le domaine technique de la cryptographie, y compris au sujet de l'établissement de clé authentifié, et de l'utilisation d'un compteur comme contremesure aux attaques de type "replay".

### OBJET DE L'INVENTION

Dans ce contexte, la présente invention telle que définie par les revendications ci-jointes, propose un procédé d'authentification d'une première entité électronique par une seconde entité électronique, caractérisé par les étapes suivantes mises en œuvre par la première entité électronique :
- réception d'un (premier) défi en provenance de la seconde entité électronique ;
- génération d'un nombre (ou second défi, ainsi dénommé par référence à la spécification technique précitée) en fonction d'une valeur courante d'un compteur et d'une première clé secrète ;
- génération d'un cryptogramme en fonction du (premier) défi et d'une seconde clé secrète ;
- transmission à destination de la seconde entité électronique d'une réponse incluant le cryptogramme sans transmission dudit nombre (second défi).

L'absence de transmission du nombre (second défi) permet d'éviter qu'un attaquant puisse tenter de découvrir la première clé secrète en observant les valeurs du nombre (second défi) transmises lors de mises en œuvre répétées du procédé, comme c'est le cas lors d'une attaque par cryptoanalyse.

L'absence de transmission du nombre (second défi) n'est toutefois pas préjudiciable à la poursuite du processus d'authentification puisqu'il s'agit en l'occurrence d'une valeur pseudo-aléatoire, que la seconde entité électronique peut déterminer sur la base d'une donnée représentative de la valeur courante du compteur.

La seconde clé secrète est par exemple une clé de session générée notamment sur la base du (premier) défi. Comme expliqué plus loin, le (premier) défi peut être une valeur aléatoire générée par la seconde entité électronique, auquel cas la seconde clé secrète est à chaque fois différente.

La réponse peut en revanche inclure, par exemple en lieu et place du second défi (conformément à la spécification technique précitée), un nombre aléatoire généré par la première entité électronique ou une valeur prédéterminée. On peut prévoir par ailleurs que la réponse inclut ladite valeur courante.

En pratique, le nombre aléatoire ou la valeur prédéterminée peut être situé(e) dans la réponse à un emplacement prévu pour un défi de carte selon le protocole Secure Channel Protocol 03, dont la spécification technique est mentionnée ci-dessus.

Le cryptogramme et le nombre (second défi) peuvent d'ailleurs être respectivement un cryptogramme de carte et un défi de carte conformes au protocole Secure Channel Protocol 03.

Le procédé peut comprendre en outre une étape de génération d'une clé de session en fonction d'une clé cryptographique, du (premier) défi et du nombre (second défi). Selon une possibilité de mise en œuvre décrite plus loin, cette clé cryptographique est la première clé secrète.

On peut prévoir ensuite une étape d'échange, entre la première entité électronique et la seconde entité électronique, de données chiffrées au moyen d'un algorithme de chiffrement utilisant la clé de session.

Comme déjà indiqué, la seconde clé secrète peut elle aussi être l'une des clés de session générées. Le cryptogramme est alors généré sur la base d'une clé de session différente pour chaque mise en œuvre du procédé. Un attaquant ne peut dans ce cas rien déduire de l'observation des valeurs successives du cryptogramme.

En pratique, l'étape de génération du cryptogramme peut utiliser ledit nombre (second défi).

Le procédé d'authentification peut en outre comprendre les étapes suivantes mises en œuvre par la seconde entité électronique :
- détermination d'un second défi en fonction d'une donnée représentative de la valeur courante du compteur et de la première clé secrète ;
- détermination d'un autre cryptogramme en fonction du second défi et d'une troisième clé secrète (éventuellement identique à la seconde clé secrète) ;
- transmission de l'autre cryptogramme à destination de la première entité électronique pour authentification de la seconde entité électronique par la première entité électronique.

La première entité électronique est par exemple une carte à microcircuit ou un circuit intégré sécurisé ; la seconde entité électronique peut être un serveur distant ou un terminal de télécommunications.

L'invention propose également une entité électronique comprenant des moyens de réception d'un (premier) défi en provenance d'une autre entité électronique, des moyens de génération d'un nombre (second défi) en fonction d'une valeur courante d'un compteur et d'une première clé secrète, des moyens de génération d'un cryptogramme en fonction du (premier) défi et d'une seconde clé secrète et des moyens de transmission à destination de l'autre entité électronique d'une réponse incluant le cryptogramme sans transmission dudit nombre (second défi).

Les caractéristiques optionnelles présentées ci-dessus relativement au procédé d'authentification peuvent également s'appliquer à cette entité électronique.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente les étapes principales d'un processus d'initiation d'un échange sécurisé de données entre une première entité électronique et une seconde entité électronique conformément aux enseignements de l'invention ;
- la figure 2 représente les étapes principales d'un processus d'authentification mutuelle qui fait suite au processus d'initiation de la figure 1.

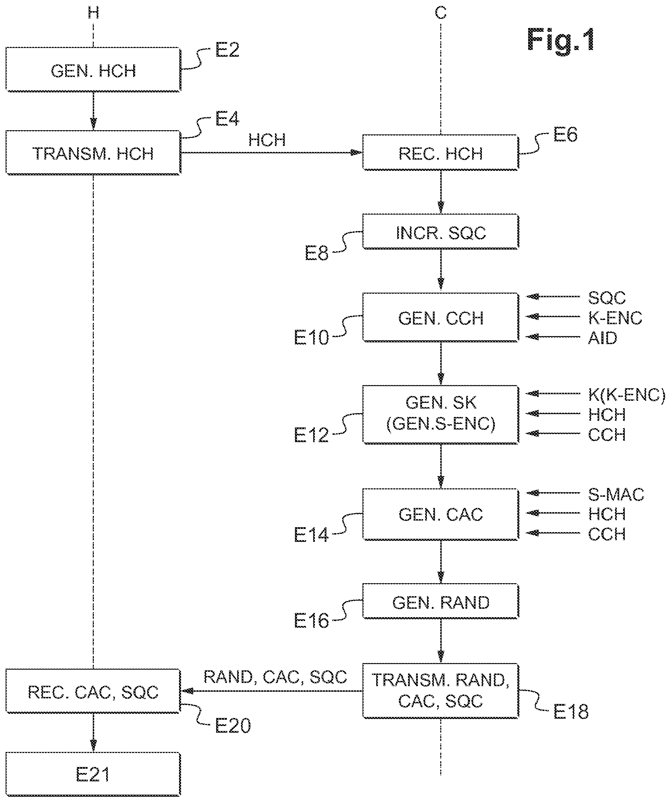

La figure 1 représente un processus d'initiation d'un échange sécurisé de données entre une première entité électronique et une seconde entité électronique conformément aux enseignements de l'invention.

Chacune des première et seconde entités électroniques comprend une interface de communication au moyen de laquelle l'entité électronique concernée peut émettre et/ou recevoir des données sur un médium de communication, où les données sont représentées par des signaux, par exemple des signaux électriques ou optiques.

La première entité électronique et la seconde entité électronique peuvent ainsi échanger des données soit directement (leurs interfaces de communication respectives étant connectées l'une à l'autre), soit par l'intermédiaire d'une ou plusieurs autres entités électroniques (par exemple des ordinateurs), éventuellement reliées entre elles et aux première et seconde entités électroniques au moyen d'un réseau informatique.

Chacune des première et seconde entités électroniques est par exemple un dispositif électronique qui comprend, outre l'interface de communication mentionnée ci-dessus, un processeur et au moins une mémoire apte à mémoriser les données reçues et manipulées par l'entité électronique. Cette mémoire mémorise également des instructions de programme d'ordinateur qui, lorsqu'elles sont exécutées, permettent la mise en œuvre par l'entité électronique des procédés décrits ci-dessous. En variante, l'une au moins des entités électroniques pourrait être réalisée sous forme d'un circuit intégré à application spécifique (ou ASIC selon l'acronyme anglo-saxon).

Dans l'exemple qui suit, la première entité électronique est une carte à microcircuit C (ou ICC pour *"Integrated Circuit Card"*) et la seconde entité électronique est un terminal H. L'invention s'applique toutefois à d'autres types d'entités électroniques.

A titre d'exemple, la première entité électronique peut être en variante un circuit intégré sécurisé (ou SE pour *"Secure Element"*), un eSE ("*embedded secure element"* pour élément sécurisé embarqué) ou une eUICC ("*embedded Universal Integrated Circuit Card"* pour carte de circuit intégré universelle et embarquée). Un élément sécurisé comprend un processeur qui lui est propre, différent du processeur du dispositif électronique hôte dans lequel il est intégré ou embarqué, et une mémoire non-volatile pour le stockage de programmes d'ordinateurs exécutables par le processeur. L'élément sécurisé est par exemple conforme aux standards ISO/IEC 7816, aux normes Critères Communs et/ou à la norme *GlobalPlatform Card Specification* v 2.2.1.

La seconde entité électronique pourrait quant à elle être un serveur distant connecté à la première entité électronique au travers d'une connexion sans fil, ou un serveur directement connecté à la seconde entité au travers d'une connexion filaire.

Le procédé représenté à la figure 1 permet le lancement d'un processus d'authentification mutuelle entre les deux entités électroniques, à l'initiative du terminal H qui joue ici le rôle d'entité électronique maître ou hôte.

Lors d'une étape E2, le terminal H génère par tirage aléatoire un défi d'hôte HCH.

Le terminal H émet alors (étape E4) à destination de la carte à microcircuit C une commande d'initialisation du processus d'authentification mutuelle, par exemple une commande du type INITALIZE UPDATE, accompagnée du défi d'hôte HCH.

Comme déjà indiqué, cette commande peut être transmise directement du terminal H à la carte à microcircuit C (les interfaces de communication étant par exemple respectivement un lecteur de carte équipant le terminal H et les contacts de la carte à microcircuit C), ou par l'intermédiaire d'une ou plusieurs autres entités électroniques.

La carte à microcircuit C reçoit la commande d'initialisation et le défi d'hôte HCH à l'étape E6.

La carte à microcircuit C procède alors à l'incrémentation d'un compteur SQC à l'étape E8. Une nouvelle valeur de compteur doit en effet être utilisée pour générer de nouvelles clés de session comme expliqué ci-dessous. Alternativement, l'incrémentation du compteur est réalisée par la carte à microcircuit C à l'issue de la réception de la commande EXTERNAL AUTHENTICATE décrite ci-après.

L'étape E8 est suivie de l'étape E10 à laquelle on génère (par exemple au moyen d'un processus de dérivation de clé) une valeur (ou nombre) pseudo-aléatoire CCH en fonction de la valeur courante du compteur SQC (valeur après incrémentation de l'étape E8), d'une clé cryptographique K-ENC mémorisée dans la carte à microcircuit C et d'un identifiant AID de l'application pour laquelle l'établissement du canal sécurisé est effectué. La génération de la valeur pseudo-aléatoire CCH est par exemple réalisée conformément à ce qui est prévu au paragraphe "6.2.2.1 *Card Challenge"* dans le document *"GlobalPlatform Card Technology* - *Secure Channel Protocol 03* - *Card Specification v 2.2 Amendment D*" déjà mentionné.

On remarque que la clé cryptographique K-ENC utilisée ici pour la génération de la valeur (ou nombre) pseudo-aléatoire CCH est une clé statique, qui a donc une valeur constante lors de mises en œuvre successives du procédé (en vue, à chaque fois, de l'établissement d'une nouvelle session d'échanges entre le terminal H et la carte à microcircuit C).

Par ailleurs, comme cela sera expliqué ci-dessous, la valeur (ou nombre) pseudo-aléatoire CCH est utilisée comme défi de la carte à microcircuit C (au sens du protocole SCP03 mentionné plus haut) pour authentification du terminal H auprès de la carte à microcircuit C.

On procède alors à l'étape E12 à laquelle la carte à microcircuit C génère différentes clés de session SK. Chaque clé de session SK est par exemple générée, au moyen d'un processus de dérivation de clé, sur la base d'une clé cryptographique correspondante (dite statique) K mémorisée dans la carte à microcircuit C, du défi d'hôte HCH (reçu à l'étape E6) et de la valeur pseudo-aléatoire CCH (générée à l'étape E10). La génération des clés de session SK est par exemple réalisée conformément à ce qui est prévu au paragraphe *"6.2.1 AES Session Keys"* dans le document *"GlobalPlatform Card Technology* - *Secure Channel Protocol 03* - *Card Specification v 2.2 Amendment D"* déjà mentionné.

Parmi les clés de session SK, on génère en particulier une clé de session de chiffrement S-ENC sur la base de la clé cryptographique K-ENC déjà mentionnée, du défi d'hôte HCH et de la valeur pseudo-aléatoire CCH.

La carte à microcircuit C détermine ensuite à l'étape E14 le cryptogramme d'authentification de la carte CAC, par exemple au moyen d'un processus de dérivation de clé, sur la base de l'une des clés de session SK (par exemple une clé de session de vérification d'intégrité S-MAC distincte de la clé de session de chiffrement S-ENC), du défi d'hôte HCH (reçu à l'étape E6) et de la valeur pseudo-aléatoire CCH (générée à l'étape E10). La détermination du cryptogramme d'authentification de la carte CAC est par exemple réalisée conformément à ce qui est prévu au paragraphe "6.2.2.2 *Card Authentication Cryptogram"* dans le document *"GlobalPlatform Card Technology* - *Secure Channel Protocol 03* - *Card Specification v 2.2 Amendment D"* déjà mentionné.

La carte à microcircuit C génère ensuite à l'étape E16 un nombre aléatoire RAND, par exemple de longueur (en octets) égale à celle de la valeur pseudo-aléatoire CCH (ici 8 octets).

La carte à microcircuit C émet alors à l'étape E18 sa réponse à la commande d'initialisation (voir ci-dessus les étapes E4 et E6), réponse qui inclut le nombre aléatoire RAND généré à l'étape E16, le cryptogramme CAC généré à l'étape E14 et la valeur courante du compteur SQC.

On remarque que, du fait de l'utilisation d'un nombre aléatoire RAND de même longueur que la valeur pseudo-aléatoire CCH, la réponse a la longueur prévue dans le document *"GlobalPlatform Card Technology* - *Secure Channel Protocol 03* - *Card Specification v 2.2 Amendment D"* déjà mentionné, soit ici 32 octets.

Toutefois, du fait que cette réponse ne contient pas le nombre (ici une valeur pseudo-aléatoire) CCH tel que défini comme défi de la carte ("*card challenge"*) par le document préalablement mentionné (mais ici un nombre aléatoire RAND), il ne sera pas possible à un tiers malintentionné de tenter de déduire la clé cryptographique K-ENC (utilisée pour la génération de la valeur pseudo-aléatoire comme indiqué ci-dessus) par l'observation du nombre (valeur pseudo-aléatoire) CCH, typiquement lors de mises en œuvre successives d'un grand nombre de tels processus d'authentification mutuelle.

Selon une variante envisageable, la carte à microcircuit C pourrait renvoyer une valeur prédéterminée ou déterministe en lieu et place du nombre aléatoire RAND (auquel cas l'étape E16 de génération du nombre aléatoire RAND pourrait être omise).

Selon une autre variante envisageable, la carte à microcircuit C pourrait ne renvoyer aucune donnée en lieu et place du nombre aléatoire RAND. La réponse émise par la carte à microcircuit C à l'étape E18 pourrait alors par exemple ne contenir que le cryptogramme CAC et le compteur SQC.

Selon une autre possibilité de réalisation, qui peut être combinée avec les divers modes de réalisation qui viennent d'être indiqués, le compteur SQC pourrait ne pas être inclus dans la réponse émise par la carte à microcircuit C à l'étape E18.

Le terminal H reçoit la réponse à l'étape E20 et peut ainsi mémoriser notamment le cryptogramme d'authentification de la carte CAC inclus dans cette réponse.

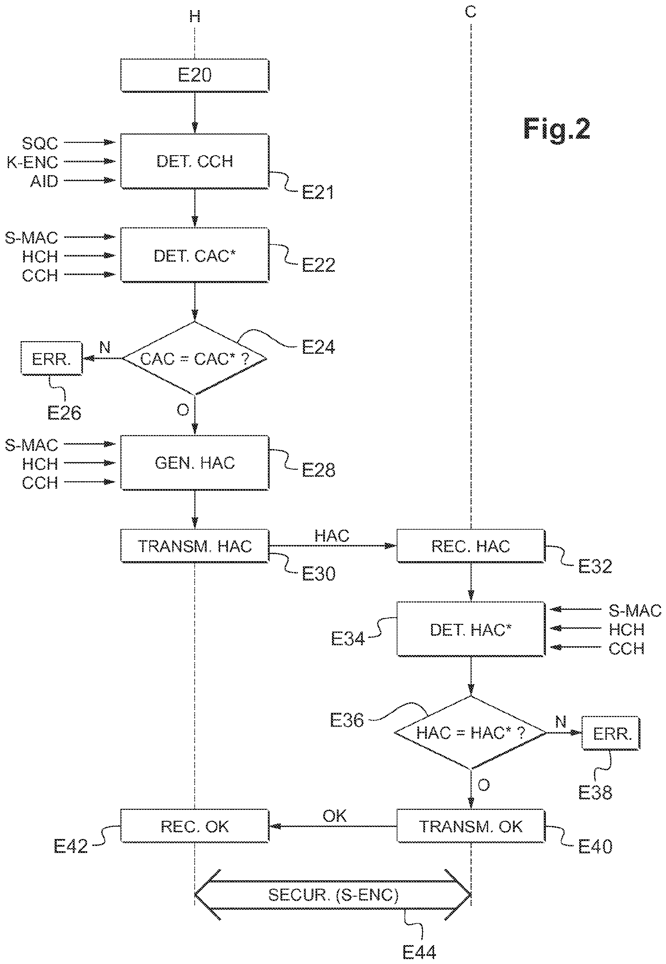

Ceci achève la phase d'initialisation du processus d'authentification mutuelle ; le processus d'authentification mutuelle peut alors se poursuivre à l'étape E21 comme expliqué ci-dessous en référence à la figure 2.

A l'étape E21, le terminal H détermine la valeur pseudo-aléatoire CCH selon un procédé identique à celui utilisé par la carte à microcircuit C à l'étape E10, utilisant la valeur courante du compteur SQC, la clé cryptographique K-ENC et l'identifiant AID.

On remarque que, dans l'exemple décrit ici, le terminal a reçu la valeur courante du compteur à l'étape E20 et a donc pu mémoriser une donnée représentative de cette valeur courante. Dans les modes de réalisation où la valeur du compteur SQC n'est pas transmise par la carte à microcircuit à l'étape E18, on peut prévoir par exemple que le compteur a une valeur initiale égale à 0 (ou une autre valeur prédéterminée) lors du premier échange (première session) et que le terminal H incrémente une donnée représentative de la valeur courante du compteur SQC à chaque nouvelle session. On peut éventuellement prévoir au surplus que le terminal H puisse émettre une commande (par exemple du type GET DATA) afin d'obtenir en réponse (en provenance de la carte à microcircuit C) la valeur courante du compteur SQC.

La clé cryptographique K-ENC est quant à elle mémorisée au sein du terminal H (s'agissant d'un secret partagé entre le terminal H et la carte à microcircuit C). La valeur de l'identifiant AID est connue de l'application du terminal H lorsque l'application installée sur le terminal H et l'application installée sur la carte à microcircuit C sont fournies par un même fournisseur. La valeur de l'identifiant AID est alors écrite dans le code de l'application du terminal H. Alternativement, la valeur de l'identifiant AID est transmise par la carte à microcircuit C, après avoir reçu une commande en ce sens. Le procédé se poursuit à l'étape E22 à laquelle le terminal H détermine de son côté le cryptogramme de la carte CAC*, au moyen du même processus et des mêmes données que ceux utilisés par la carte à microcircuit C à l'étape E14. Pour ce faire, le terminal H génère en particulier la clé de session S-MAC utilisée, avec le défi d'hôte HCH (généré par le terminal à l'étape E2) et la valeur pseudo-aléatoire CCH (déterminée par le terminal H à l'étape E21), pour déterminer la cryptogramme de la carte CAC*.

On peut prévoir que le terminal H génère à cette étape d'autres clés de session, notamment la clé de session S-ENC déjà mentionnée (calculée par le terminal H sur la base de la clé cryptographique mémorisée K-ENC, du défi d'hôte HCH généré à l'étape E2 et de la valeur pseudo-aléatoire CCH déterminée à l'étape E21).

Le terminal H compare alors à l'étape E24 le cryptogramme CAC* déterminé à l'étape E22 au cryptogramme CAC reçu à l'étape E20. On remarque que cette étape E24 est optionnelle en mode prédictif. En effet, ce mode permet de pré-générer un ensemble de clefs de sessions, et permet ainsi d'éviter que la carte à microcircuit C et le terminal H soient connectés. Dans ce cas, la carte émet une réponse, mais le terminal n'est pas nécessairement connecté avec la carte C et n'analyse donc pas cette réponse.

Si le résultat de la comparaison est positif (c'est-à-dire si le cryptogramme calculé CAC* est égal au cryptogramme reçu CAC), la carte à microcircuit C a répondu correctement au défi du terminal H et s'est donc authentifiée auprès du terminal H. Le processus d'authentification mutuelle peut alors se poursuivre à l'étape E28 décrite plus bas (pour authentification du terminal H par la carte à microcircuit C).

Si le résultat de la comparaison de l'étape E24 est négatif (c'est-à-dire si le cryptogramme calculé CAC* est différent du cryptogramme reçu CAC), l'authentification de la carte à microcircuit C par le terminal H a échoué et le terminal H procède alors à l'étape E26 au traitement de cette anomalie, par exemple en mettant fin à l'échange de données avec la carte à microcircuit C.

Lorsque le processus d'authentification mutuelle se poursuit (en cas de résultat positif de la comparaison à l'étape E24), le terminal H procède à l'étape E28 à la génération d'un cryptogramme d'authentification de l'hôte HAC.

Le cryptogramme d'authentification de l'hôte HAC est par exemple généré au moyen d'un processus de dérivation de clé et sur la base de l'une des clés de session SK (par exemple la clé de session de vérification d'intégrité S-MAC), du défi d'hôte HCH (généré à l'étape E2) et de la valeur pseudo-aléatoire CCH (déterminée à l'étape E21). La détermination du cryptogramme d'authentification de l'hôte HAC est par exemple réalisée conformément à ce qui est prévu au paragraphe "6.2.2.3 *Host Authentication Cryptogram"* dans le document *"GlobalPlatform Card Technology* - *Secure Channel Protocol 03* - *Card Specification v 2.2 Amendment D"* déjà mentionné.

Afin d'obtenir un cryptogramme d'authentification de l'hôte HAC différent du cryptogramme d'authentification de la carte CAC alors que les processus de dérivation de clé utilisés dans chaque cas sont identiques, on prévoit dans l'exemple décrit ici que le processus de dérivation de clé s'applique non seulement aux données mentionnées ci-dessus (clé de session S-MAC, défi d'hôte HCH, valeur pseudo-aléatoire CCH), mais également à une constante de dérivation (par exemple d'une longueur de 1 octet) ayant des valeurs différentes respectivement dans le cas de la génération du cryptogramme d'authentification de la carte CAC (étapes E14 et E22), où la constante de dérivation a par exemple la valeur 0, et dans le cas de la génération du cryptogramme d'authentification de l'hôte HAC (étapes E28 et E34 décrite plus bas), où la constante de dérivation a par exemple la valeur 1.

Le terminal H transmet alors à la carte à microcircuit C le cryptogramme HAC généré à l'étape E28, par exemple au sein d'une commande EXTERNAL AUTHENTICATE. On peut prévoir de transmettre également à cette occasion un code d'authentification de message afin que la carte à microcircuit puisse vérifier l'intégrité du cryptogramme HAC transmis.

La carte à microcircuit C reçoit le cryptogramme HAC à l'étape E32 et, après une éventuelle vérification du code d'authentification de message lorsqu'un tel code est transmis, mémorise le cryptogramme HAC pour comparaison ultérieure (voir ci-dessous l'étape E36).

La carte à microcircuit C détermine alors de son côté à l'étape E34 la valeur attendue HAC* du cryptogramme d'authentification de l'hôte sur la base du même processus et des mêmes données que ceux utilisés à l'étape E28. La carte à microcircuit C utilise dans cette étape la clé de session S-MAC générée à l'étape E12, le défi d'hôte HCH reçu à l'étape E6, la valeur pseudo-aléatoire CCH générée à l'étape E10 et la constante de dérivation prédéterminée associée au calcul du cryptogramme d'authentification de l'hôte (de valeur 1 dans l'exemple décrit ici).

La carte à microcircuit peut ainsi comparer à l'étape E36 le cryptogramme HAC reçu à l'étape E32 et le cryptogramme HAC* déterminé (par la carte microcircuit C) à l'étape E34.

Si le cryptogramme reçu HAC et le cryptogramme calculé HAC* sont égaux (résultat positif de la comparaison), le terminal H s'est correctement authentifié auprès de la carte à microcircuit C et le processus d'authentification mutuelle se termine donc avec succès selon les modalités expliquées plus bas (étapes E40 et E42).

En revanche, si le cryptogramme reçu HAC et le cryptogramme calculé HAC* sont différents (résultat négatif de la comparaison), le terminal H n'est pas authentifié par la carte à microcircuit C et l'ouverture d'un canal sécurisé entre le terminal H et la carte à microcircuit C est donc impossible. On prévoit par exemple dans ce cas que la carte à microcircuit C envoie à l'étape E38 un statut d'erreur au terminal H en réponse à la commande EXTERNAL AUTHENTICATE.

Lorsque le résultat de la comparaison de l'étape E36 est positif, la carte à microcircuit C procède à l'étape E40 à l'émission d'une réponse incluant un statut de fonctionnement correct OK à destination du terminal H.

Le terminal H reçoit cette réponse à l'étape E42, ce qui confirme le succès du processus d'authentification mutuelle.

On remarque qu'à aucun moment (que ce soit au cours de la phase d'initiation décrit à la figure 1 ou au cours de la phase d'authentification mutuelle stricto sensu décrite à la figure 2) le défi de la carte à microcircuit C destiné au terminal H (c'est-à-dire ici la valeur pseudo-aléatoire CCH) n'a été transmis de la carte à microcircuit C au terminal H.

Le processus d'authentification mutuelle étant achevé avec succès, on peut mettre en place des échanges sécurisés de données entre le terminal H et la carte à microcircuit C (étape E44), en chiffrant par exemple les données échangées au moyen d'un algorithme de chiffrement symétrique utilisant la clé de session de chiffrement S-ENC.

## Revendications

1. Procédé d'authentification d'une première entité électronique (C) par une seconde entité électronique (H), **caractérisé par** les étapes suivantes mises en œuvre par la première entité électronique (C) :
- réception (E6) d'un défi (HCH) en provenance de la seconde entité électronique (H) ;
- génération (E10) d'un nombre (CCH) en fonction d'une valeur courante d'un compteur (SQC) et d'une première clé secrète (K-ENC) ;
- génération (E12) d'une clé de session (SK) en fonction d'une clé cryptographique (K-ENC), du défi (HCH) et dudit nombre (CCH) ;
- génération (E14) d'un cryptogramme (CAC) en fonction du défi (HCH) et d'une seconde clé secrète (S-MAC) ;
- transmission (E18) à destination de la seconde entité électronique (H) d'une réponse incluant le cryptogramme (CAC) sans transmission dudit nombre (CCH),
dans lequel l'étape de génération (E14) du cryptogramme (CAC) utilise ledit nombre (CCH).

2. Procédé d'authentification selon la revendication 1, dans lequel la réponse inclut un nombre aléatoire (RAND) généré par la première entité électronique (C).

3. Procédé d'authentification selon la revendication 2, dans lequel ledit nombre aléatoire (RAND) est situé dans la réponse à un emplacement prévu pour un défi de carte selon le protocole Secure Channel Protocol 03.

4. Procédé d'authentification selon la revendication 1, dans lequel la réponse inclut une valeur prédéterminée.

5. Procédé d'authentification selon la revendication 4, dans lequel ladite valeur prédéterminée est située dans la réponse à un emplacement prévu pour un défi de carte selon le protocole Secure Channel Protocol 03.

6. Procédé d'authentification selon l'une des revendications 1 à 5, dans lequel la réponse inclut ladite valeur courante (SQC).

7. Procédé d'authentification selon l'une des revendications 1 à 6, dans lequel la clé cryptographique est la première clé secrète (K-ENC).

8. Procédé d'authentification selon l'une des revendications 1 à 7, comprenant une étape (E44) d'échange, entre la première entité électronique (C) et la seconde entité électronique (H), de données chiffrées au moyen d'un algorithme de chiffrement utilisant la clé de session (S-ENC).

9. Procédé d'authentification selon l'une des revendications 1 à 6, dans lequel la clé de session générée est la seconde clé secrète (S-MAC).

10. Procédé d'authentification selon l'une des revendications 1 à 9, **caractérisé en ce qu'**il comprend les étapes suivantes mises en œuvre par la seconde entité électronique (H) :
- détermination d'un second défi (CCH) en fonction d'une donnée représentative de la valeur courante du compteur (SQC) et de la première clé secrète (K-ENC) ;
- détermination d'un autre cryptogramme (HAC) en fonction du second défi (CCH) et d'une troisième clé secrète (S-MAC) ;
- transmission de l'autre cryptogramme (HAC) à destination de la première entité électronique (C) pour authentification de la seconde entité électronique (H) par la première entité électronique (C).

11. Procédé selon l'une des revendications 1 à 10, dans lequel la première entité électronique (C) est une carte à microcircuit ou un circuit intégré sécurisé.

12. Procédé selon l'une des revendications 1 à 11, dans lequel la seconde entité électronique (H) est un serveur distant ou un terminal de télécommunications.

13. Procédé selon l'une des revendications 1 à 12, dans lequel le cryptogramme (CAC) et ledit nombre (CCH) sont respectivement un cryptogramme de carte et un défi de carte conformes au protocole Secure Channel Protocol 03.

14. Entité électronique (C) comprenant :
- des moyens de réception d'un défi (HCH) en provenance d'une autre entité électronique (H) ;
- des moyens de génération d'un nombre (CCH) en fonction d'une valeur courante d'un compteur (SQC) et d'une première clé secrète (K-ENC) ;
- des moyens de génération d'une clé de session (SK) en fonction d'une clé cryptographique (K-ENC), du défi (HCH) et dudit nombre (CCH) ;
- des moyens de génération d'un cryptogramme (CAC) en fonction du défi (HCH) et d'une seconde clé secrète (S-MAC), lesdits moyens de génération du cryptogramme (CAC) utilisant ledit nombre (CCH) ;
- des moyens de transmission à destination de l'autre entité électronique (H) d'une réponse incluant le cryptogramme (CAC) sans transmission dudit nombre (CCH).

## Patentansprüche

1. Verfahren zur Authentifizierung einer ersten elektronischen Einheit (C) durch eine zweite elektronische Einheit (H), **gekennzeichnet durch** die folgenden, von der ersten elektronischen Einheit (C) umgesetzten Schritte:
- Empfangen (E6) einer von der zweiten elektronischen Einheit (H) kommenden Aufforderung (HCH),
- Erzeugen (E10) einer Zahl (CCH) in Abhängigkeit von einem laufenden Wert eines Zählers (SQC) und von einem ersten geheimen Schlüssel (K-ENC),
- Erzeugen (E12) eines Sitzungsschlüssels (SK) in Abhängigkeit von einem kryptografischen Schlüssel (K-ENC), von der Aufforderung (HCH) und von der Zahl (CCH),
- Erzeugen (E14) eines Kryptogramms (CAC) in Abhängigkeit von der Aufforderung (HCH) und von einem zweiten geheimen Schlüssel (S-MAC),
- Übertragen (E18) einer das Kryptogramm (CAC) enthaltenden Antwort an die zweite elektronische Einheit (H), ohne die Zahl (CCH) zu übertragen,
wobei der Schritt des Erzeugens (E14) des Kryptogramms (CAC) die Zahl (CCH) verwendet.

2. Authentifizierungsverfahren gemäß Anspruch 1, bei dem die Antwort eine durch die erste elektronische Einheit (C) erzeugte Zufallszahl (RAND) enthält.

3. Authentifizierungsverfahren gemäß Anspruch 2, bei dem die Zufallszahl (RAND) in der Antwort an einem für eine Kartenaufforderung gemäß dem Protokoll Secure Channel Protocol 03 vorgesehenen Platz angeordnet ist.

4. Authentifizierungsverfahren gemäß Anspruch 1, bei dem die Antwort einen vorbestimmten Wert enthält.

5. Authentifizierungsverfahren gemäß Anspruch 4, bei dem der vorbestimmte Wert in der Antwort an einem für eine Kartenaufforderung gemäß dem Protokoll Secure Channel Protocol 03 vorgesehenen Platz angeordnet ist.

6. Authentifizierungsverfahren gemäß einem der Ansprüche 1 bis 5, bei dem die Antwort den laufenden Wert (SQC) enthält.

7. Authentifizierungsverfahren gemäß einem der Ansprüche 1 bis 6, bei dem der kryptografische Schlüssel der erste geheime Schlüssel (K-ENC) ist.

8. Authentifizierungsverfahren gemäß einem der Ansprüche 1 bis 7 mit einem Schritt (E44) des Austauschens von mittels eines den Sitzungsschlüssel (S-ENC) verwendenden Chiffrieralgorithmus chiffrierten Daten zwischen der ersten elektronischen Einheit (C) und der zweiten elektronischen Einheit (H).

9. Authentifizierungsverfahren gemäß einem der Ansprüche 1 bis 6, bei dem der erzeugte Sitzungsschlüssel der zweite geheime Schlüssel (S-MAC) ist.

10. Authentifizierungsverfahren gemäß einem der Ansprüche 1 bis 9, **dadurch gekennzeichnet, daß** es die folgenden, durch die zweite elektronische Einheit (H) umgesetzten Schritte aufweist:
- Bestimmen einer zweiten Aufforderung (CCH) in Abhängigkeit von einem den laufenden Wert des Zählers (SQC) darstellenden Datums und von dem ersten geheimen Schlüssel (K-ENC),
- Bestimmen eines weiteren Kryptogramms (HAC) in Abhängigkeit von der zweiten Aufforderung (CCH) und von einem dritten geheimen Schlüssel (S-MAC),
- Übertragen des weiteren Kryptogramms (HAC) an die erste elektronische Einheit (C) zur Authentifizierung der zweiten elektronischen Einheit (H) durch die erste elektronische Einheit (C).

11. Authentifizierungsverfahren gemäß einem der Ansprüche 1 bis 10, bei dem die erste elektronische Einheit (C) eine Karte mit einem Mikroschaltkreis oder eine gesicherte integrierte Schaltung ist.

12. Authentifizierungsverfahren gemäß einem der Ansprüche 1 bis 11, bei dem die zweite elektronische Einheit (H) ein entfernter Server oder ein Fernmeldeterminal ist.

13. Authentifizierungsverfahren gemäß einem der Ansprüche 1 bis 12, bei dem das Kryptogramm (CAC) und die Zahl (CCH) ein Kartenkryptogramm beziehungsweise eine Kartenaufforderung gemäß dem Protokoll Secure Channel Protocol 03 sind.

14. Elektronische Einheit (C) mit:
- Mitteln zum Empfangen einer von einer anderen elektronischen Einheit (H) kommenden Aufforderung (HCH),
- Mitteln zum Erzeugen einer Zahl (CCH) in Anhängigkeit von einem laufenden Wert eines Zählers (SQC) und von einem ersten geheimen Schlüssel (K-ENC),
- Mitteln zum Erzeugen eines Sitzungsschlüssels (SK) in Abhängigkeit von einem kryptografischen Schlüssel (K-ENC), von der Aufforderung (HCH) und von der Zahl (CCH),
- Mitteln zum Erzeugen eines Kryptogramms (CAC) in Abhängigkeit von der Aufforderung (HCH) und von einem zweiten geheimen Schlüssel (S-MAC), wobei die Mittel zum Erzeugen des Kryptogramms (CAC) die Zahl (CCH) verwenden,
- Mitteln zum Übertragen einer das Kryptogramm (CAC) enthaltenden Antwort an die andere elektronische Einheit (H), ohne die Zahl (CCH) zu übertragen.

## Claims

1. A method of authentication of a first electronic entity (C) by a second electronic entity (H), **characterised by** the following steps implemented by the first electronic entity (C):
- reception (E6) of a challenge (HCH) originating from the second electronic entity (H);
- generation (E10) of a number (CCH) as a function of a current value of a counter (SQC) and of a first secret key (K-ENC);
- generation of a session key (SK) as a function of a cryptographic key (K-ENC), of the challenge (HCH) and of said number (CCH);
- generation (E14) of a cryptogram (CAC) as a function of the challenge (HCH) and of a second secret key (S-MAC);
- transmission (E18) to the second electronic entity (H) of a response including the cryptogram (CAC) without transmission of said number (CCH),
wherein the step of generation (E14) of the cryptogram (CAC) uses said number (CCH).

2. A method of authentication according to claim 1, wherein the response includes a random number (RAND) generated by the first electronic entity (C).

3. A method of authentication according to claim 2, wherein said random number (RAND) is situated in the response at a location provided for a card challenge according to the Secure Channel Protocol 03 protocol.

4. A method of authentication according to claim 1, wherein the response includes a predetermined value.

5. A method of authentication according to claim 4, wherein said predetermined value is situated in the response at a location provided for a card challenge according to the Secure Channel Protocol 03 protocol.

6. A method of authentication according to one of claims 1 to 5, wherein the response includes said current value (SQC).

7. A method of authentication according to one of claims 1 to 6, wherein the cryptographic key is the first secret key (K-ENC).

8. A method of authentication according to one of claims 1 to 7, comprising a step (E44) of exchanging, between the first electronic entity (C) and the second electronic entity (H), data enciphered by means of an encryption algorithm using the session key (S-ENC).

9. A method of authentication according to one of claims 1 to 6, wherein the session key generated is the second secret key (S-MAC).

10. A method of authentication according to one of claims 1 to 9, **characterised in that** it comprises the following steps implemented by the second electronic entity (H):
- determination of a second challenge (CCH) as a function of a datum representative of the current value of the counter (SQC) and of the first secret key (K-ENC);
- determination of another cryptogram (HAC) as a function of the second challenge (CCH) and of a third secret key (S-MAC);
- transmission of the other cryptogram (HAC) to the first electronic entity (C) for authentication of the second electronic entity (H) by the first electronic entity (C).

11. A method according to one of claims 1 to 10, wherein the first electronic entity (C) is a microcircuit card or a secure integrated circuit.

12. A method according to one of claims 1 to 11, wherein the second electronic entity (H) is a remote server or a telecommunications terminal.

13. A method according to one of claims 1 to 12, wherein the cryptogram (CAC) and said number (CCH) are respectively a card cryptogram and a card challenge in accordance with the Secure Channel Protocol 03 protocol.

14. An electronic entity (C) comprising:
- means for receiving a challenge (HCH) originating from another electronic entity (H);
- means for generating a number (CCH) as a function of a current value of a counter (SQC) and of a first secret key (K-ENC);
- means for generating a session key (SK) as a function of a cryptographic key (K-ENC), of the challenge (HCH) and of said number (CCH);
- means for generating a cryptogram (CAC) as a function of the challenge (HCH) and of a second secret key (S-MAC), said means for generating the cryptogram (CAC) using said number (CCH);
- means for transmitting to the other electronic entity (H) a response including the cryptogram (CAC) without transmission of said number (CCH).
